# EUROPEAN PATENT SPECIFICATION

(11) **EP 4 150 863 B1**
(45) Date of publication and mention of the grant of the patent: **15.04.2026**
(21) Application number: 21829231.6
(22) Date of filing: 23.06.2021
(51) Int. Cl.: H04L 41/0233, H04W 24/02, H04W 84/04, H04W 88/18

(54) **METHOD AND SYSTEM FOR EAS LIFECYCLE MANAGEMENT WITH EDGE DATA NETWORK SELECTION**
VERFAHREN UND SYSTEM ZUR EAS-LEBENSZYKLUSVERWALTUNG MIT RANDDATENNETZWERKAUSWAHL
PROCÉDÉ ET SYSTÈME DE GESTION DE CYCLE DE VIE D'EAS AVEC SÉLECTION DE RÉSEAU DE DONNÉES PÉRIPHÉRIQUE

(30) Priority: 25.06.2020 IN 202041026990; 28.04.2021 IN 202041026990
(43) Date of publication of application: 22.03.2023
(73) Proprietor: Samsung Electronics Co., Ltd., Gyeonggi-do 16677 (KR)
(72) Inventor: GAUTAM, Deepanshu, Bangalore 560037 (IN); GUPTA, Nishant, Bangalore 560037 (IN); FEATHERSTONE, Walter, Staines, Middlesex TW18 4QE (GB)
(74) Representative: Nederlandsch Octrooibureau
(86) International application number: PCT/KR2021/007871
(87) International publication number: WO 2021/261904

(56) References cited:
- US-A1- 2019 266 012
- US-A1- 2020 021 487
- QUALCOMM INC: "3GPP TSG SA4 #90-e, S4-200843; Overview of ongoing 3GPP activities on Edge", vol. SA WG4, no. 20200520 - 20200603, 18 May 2020 (2020-05-18), XP051886986, Retrieved from the Internet <URL:https://ftp.3gpp.org/tsg_sa/WG4_CODEC/TSGS4_109-e/Docs/S4-200843.zip S4-200843_overview_edge.doc> [retrieved on 20200518]
- SAMSUNG: "3GPP TSG SA WG5 Meeting #133-e; S5-205035; pCR 28.814 solution for EAS deployment", vol. SA WG5, no. e-meeting ;20201012 - 20201021, 2 October 2020 (2020-10-02), XP051938804, Retrieved from the Internet <URL:https://ftp.3gpp.org/tsg_sa/WG5_TM/TSGS5_133e/Docs/S5-205035.zip S5-205035 pCR 28.814 Soluton for EAS deployment.doc> [retrieved on 20201002]
- SAMSUNG ET AL: "3GPP TSG SA WG5 Meeting #133-e; S5-205285; pCR 28.814 solution for EAS deployment", vol. SA WG5, no. e-meeting ;20201012 - 20201021, 2 November 2020 (2020-11-02), XP051950114, Retrieved from the Internet <URL:https://ftp.3gpp.org/tsg_sa/WG5_TM/TSGS5_133e/Docs/S5-205285.zip S5-205285 pCR 28.814 Soluton for EAS deployment.doc> [retrieved on 20201102]
- 3GPP TR 28.814 V17.0.0 (2021-09): "3GPP TR 28.814 V17.0.0 (2021-09); 3rd Generation Partnership Project; Technical Specification Group Services and System Aspects; Management and orchestration; Study on enhancements of edge computing management (Release 17)", no. V17.0.0, 24 September 2021 (2021-09-24), pages 1 - 49, XP052056780, Retrieved from the Internet <URL:https://ftp.3gpp.org/Specs/archive/28_series/28.814/28814-h00.zip 28814-h00.doc> [retrieved on 20210924]
- "3rd Generation Partnership Project; Technical Specification Group Services and System Aspects; Architecture for enabling Edge Applications; (Release 17)", 3GPP STANDARD; TECHNICAL SPECIFICATION; 3GPP TS 23.558, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 4 June 2020 (2020-06-04), Mobile Competence Centre ; 650, route des Lucioles ; F-06921 Sophia-Antipolis Cedex ; France , pages 1 - 70, XP051894073
- "3rd Generation Partnership Project; Technical Specification Group Services and System Aspects; Management and orchestration; Generic management services; (Release 16)", 3GPP STANDARD; TECHNICAL SPECIFICATION; 3GPP TS 28.532, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V16.3.0, 27 March 2020 (2020-03-27), Mobile Competence Centre ; 650, route des Lucioles ; F-06921 Sophia-Antipolis Cedex ; France , pages 1 - 230, XP051861134
- "3rd Generation Partnership Project; Technical Specification Group Services and System Aspects; Management and orchestration; Performance assurance (Release 16)", 3GPP STANDARD; TECHNICAL SPECIFICATION; 3GPP TS 28.550, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V16.4.0, 27 March 2020 (2020-03-27), Mobile Competence Centre ; 650, route des Lucioles ; F-06921 Sophia-Antipolis Cedex ; France , pages 1 - 114, XP051861141

## Description

### [Technical Field]

The present disclosure relates to a method performed by an edge computing management service provider (ECMSP) in a wireless communication system and the ECMSP.

### [Background Art]

Traditionally, 5G system consists of 5G Access Network (AN), 5G Core Network and UE, see 3GPP TS 23.501 [3]. 5G system is expected to be able to provide optimized support for a variety of different communication services, different traffic loads, and different end user communities. For example, the communication services using network slicing may include V2X services- The 5G system aims to enhance its capability to meet KPIs that emerging V2X applications require. For these advanced applications, the requirements, such as data rate, reliability, latency, communication range and speed, are made more stringent, 5G seamless eMBB- As one of the key technologies to enable network slicing, fixed mobile convergence (FMC) which includes wireless-to-the-everything (WTTx) and fibre-to-the-everything (FTTx), is expected to provide native support for network slicing. For optimization and resource efficiency, the 5G system will select the most appropriate 3GPP or non-3GPP access technology for a communication service, potentially allowing multiple access technologies to be used simultaneously for one or more services active on a UE, massive IoT connections-Support for massive Internet of Things (mloT) brings many new requirements in addition to MBB enhancements. Communication services with massive IoT connections such as smart households, smart grid, smart agriculture and smart meter will require the support of a large number and high-density IoT devices to be efficient and cost effective. Operators can use one or more network slice instances to provide these communication services, which require similar network characteristics, to different vertical industries. 3GPP TS 28.530 and 28.531 defines the management of Network Slice in 5G networks. It also defined the concept of Communication Services, which are provided using one or multiple Network Slice. A Network Slice Instance (NSI) may support multiple Communication Service Instances (CSI). Similarly, a CSI may utilize multiple NSIs.

Further, 3GPP SA6 is working on an architecture for enabling edge computing (3GPP TR 23.558), which specifies an application framework or an enabling layer platform to support Edge Computing in 3GPP specified networks, (e.g. discovery of edge services, authentication of the clients). The work includes the interactions between the UE and the enabling layer platform, and the interactions between the applications deployed over edge and the enabling layer platform. Further, the work is to facilitate integration with the underlying 3GPP core network. The work defines Edge Application Server (EAS) or Edge Application as a piece of software running and deployed on virtual infrastructure at the edge of the 3GPP network.

The lifecycle management of edge components is considered to be a crucial management aspect. SA6 has defined EAS as the application server resident in the Edge Data Network, performing the server functions. This use case pertains to the case when the EAS is to be deployed on the operators EDN being managed by the operator's management system. The lifecycle of EAS (instantiation, termination, scaling, etc) need to be managed. Further, there can be multiple Edge Data Network (EDN) present/serving a particular edge location. The implication is that a UE in a particular location can be served by multiple EDNs. A restriction is that the EAS is only available to the UE(s) connecting to the EDN(s) associated with the EAS. This makes it critical for application service provider to have their EAS deployed at appropriate EDN(s). This use case enables deployment of an EAS in a particular EDN, or in a set of EDNs, as per the EAS requirements.

Thus, there is a need for a solution that overcomes the above deficiencies. Document "3GPP TSG SA4 #90-e, S4-200843; Overview of ongoing 3GPP activities on Edge", 3GPP DRAFT; S4-200843, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. 20200520 - 20200603 18 May 2020 (2020-05-18)," discloses Edge Computing, for examples, such as an architecture defining the key nodes, functions and the interfaces between them.

### [Disclosure of Invention]

### [Solution to Problem]

This summary is provided to introduce a selection of concepts, in a simplified format, that are further described in the detailed description of the invention. This summary is neither intended to identify key or essential inventive concepts of the invention and nor is it intended for determining the scope of the invention.

The invention is set out in the appended set of claims.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### [Brief Description of Drawings]

These and other features, aspects, and advantages of the present invention will become better understood when the following detailed description is read with reference to the accompanying drawings in which like characters represent like parts throughout the drawings, wherein:
FIG. 1 illustrates an environment for deploying an Edge Application Server (EAS), in accordance with embodiment of the present subject matter;
FIG. 2 illustrates a schematic block diagram of an Edge Computing Management Service provider (ECMSP) for deploying an EAS, in accordance with an embodiment of the present subject matter;
FIG. 3 illustrates an operational flow diagram depicting a process for deploying an EAS, in accordance with an embodiment of the present subject matter;
FIG. 4 illustrates a flow diagram depicting an affinity and anti-affinity handling, in accordance with an embodiment of the present subject matter; and
FIG. 5 illustrates a flowchart of a method for deploying an EAS, in accordance with the present invention;
FIG. 6 illustrates a schematic block diagram of an Edge Computing Management Service Consumer (ECMSC) for deploying an EAS, in accordance with an embodiment of the present subject matter.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### Mode for the Invention

For promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises.. a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skilled in the art to which this invention belongs. The system, methods, and examples provided herein are illustrative only and not intended to be limiting.

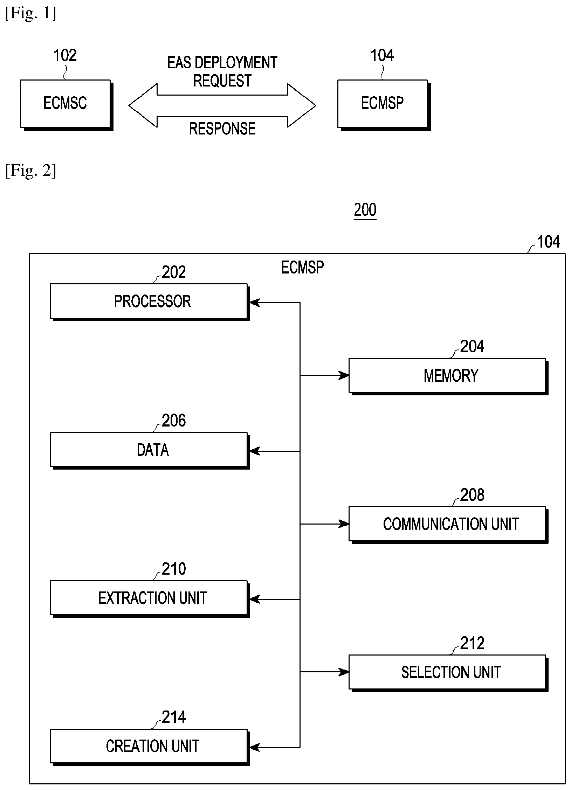

Fig. 1 illustrates a communication environment 100 for deploying an Edge Application Server (EAS). In an embodiment, the EAS may be deployed in one or more Edge Data Networks (EDN) at an edge location in a network, in accordance with an embodiment of the present subject matter. In an embodiment, the communication environment 100 may include an Edge Computing Management Service Consumer (ECMSC) 102 and an Edge Computing Management Service Provider (ECMSP) 104. In an embodiment, ECMSP 104 may be a management entity configured to expose a management service. In an embodiment, the management service may be a provisioning management service as defined in TS 28.532. Further, the ECMSC 102 may be configured to consume the management service exposed by the ECMSP 104 for sending the EAS deployment request. In an embodiment, the ECMSC 102 may be configured to provide the EAS for deployment and the ECMSP 104 may be configured to deploy the EAS in one or more EDNs. In an embodiment, the EAS may be deployed in one or more EDNs such that one or more User Equipment (UE) connected to the one or more EDN may be served by the EAS.

Furthermore, the EAS may be deployed upon selection of the one or more EDNs from a number of EDNs present at the edge location in the network. In an embodiment, the edge location may be referred as a distinct location in the network. In other words, the one or more UE connected to the one or more EDNs may be served by the EAS upon deployment of the EAS in the one or more EDNs.

Continuing with the above embodiment, the ECMSP 104 may be configured to receive an Edge Application Server (EAS) deployment request from the ECMSC 102. for deployment of the EAS in the one or more EDNs. In an embodiment, the EAS deployment request may be based on a Managed Object Instance (MOI) creation operation defined in 3GPP. In an embodiment, the EAS deployment request may be to create an EAS instance related to an EASFunction class for deployment of the EAS in the one or more EDNs. In an embodiment, the EAS deployment request may include one or more requirements for creating an EAS instance. In an embodiment, the one or more requirements may include a service area, an affinity and an anti-affinity, a service continuity, a cost for EAS deployment, Virtual Resource (VR) requirements, a required latency, an availability schedule of the EAS, and an availability reporting period of the EAS.

Moving forward, the ECMSP 104 may be configured to extract the one or more requirements from the EAS deployment request. Upon extraction of the one or more requirements from the EAS deployment request, the ECMSP 104 may be configured to select an EDN from the number of EDNs satisfying at least one of the one or more requirements for the EAS instance.

Subsequently, upon selecting the EDN, the ECMSP 104 may be configured to create the MOI corresponding to the EAS deployment request for the EASFunction class. In an embodiment, the EAS instance may contain the one or more requirements for selecting the EDN.

Fig. 2 illustrates a schematic block diagram 200 of the ECMSP 104 for deploying an EAS, in accordance with an embodiment of the present subject matter. In an embodiment, the ECMSP 104 may be configured to deploy the EAS onto one or more EDNs for providing a number of services to a number of UE connected to the one or more EDNs. In an embodiment, the ECMSP 104 may be configured to deploy the EAS upon receiving an EAS deployment request from the ECMSC 102 as referred in the FIG. 1. In an embodiment, the ECMSP 104 may be a hardware, a software, or a combination of hardware and software.

In an embodiment, the ECMSP 104 may include a processor 202, a memory 204, data 206, a communication unit 208 (e.g., communicator, transceiver, or communication interface), an extraction unit 210, a selection unit 212, and a creation unit 214. In an embodiment, the processor 202, the memory 204, the data 206, the communication unit 208, the extraction unit 210, the selection unit 212, and the creation unit 212 may be communicably coupled to one another. Hereinafter, it is understood that terms including "unit" or "er" at the end may refer to the unit for processing at least one function or operation and may be implemented in hardware, software, or a combination of hardware and software. The units may not be essential to perform methods of this application. The units may be controlled by the processor 202.

As would be appreciated, the ECMSP 104, may be understood as one or more of a hardware, a software, a logic-based program, a configurable hardware, and the like. In an example, the processor 202 may be a single processing unit or a number of units, all of which could include multiple computing units. The processor may be implemented as one or more microprocessors, microcomputers, microcontrollers, digital signal processors, central processing units, processor cores, multi-core processors, multiprocessors, state machines, logic circuitries, application-specific integrated circuits, field-programmable gate arrays and/or any devices that manipulate signals based on operational instructions. Among other capabilities, the processor 202 may be configured to fetch and/or execute computer-readable instructions and/or data 206 stored in the memory 204.

In an example, the memory 204 may include any non-transitory computer-readable medium known in the art including, for example, volatile memory, such as static random access memory (SRAM) and/or dynamic random access memory (DRAM), and/or non-volatile memory, such as read-only memory (ROM), erasable programmable ROM (EPROM), flash memory, hard disks, optical disks, and/or magnetic tapes. The memory 204 may include the data 206.

The data 206 serves, amongst other things, as a repository for storing data processed, received, and generated by one or more of, the processor 202, the memory 204, the communication unit 208, the extraction unit 210, the selection unit 212, and the creation unit 212.

In an embodiment, the communication unit 208 may be configured to wirelessly communicate with the ECMSC 102. In an embodiment, the communication unit 208 may be configured to receive the EAS deployment request upon communicating with the ECMSC 102. In an embodiment, the EAS deployment request may be defined in accordance with a Managed Object Instance (MOI) creation operation defined in 3GPP. Further, the EAS deployment request may be transmitted by the ECMSC 102 to create an EAS instance in order to deploy the EAS. In an embodiment, the EAS instance may be related to an EASFunction class. In an embodiment, the EAS instance may be considered as an object of the EASFunction class. Furthermore, the EAS deployment request may include one or more requirements related to the EAS.

Subsequent to receiving the EAS deployment request at the communication unit 208 from the ECMSC 102, the extraction unit 210 may be configured to extract the one or more requirements from the EAS deployment request. In an embodiment, the one or more requirements may include a service area, an affinity and an anti-affinity, a service continuity, a cost for EAS deployment, Virtual Resource (VR) requirements, a required latency, an availability schedule of the EAS, and an availability reporting period of the EAS.

Continuing with the above embodiment, upon extraction of the one or more requirements by the extraction unit 210, the selection unit 212 may be configured to select the one or more EDN from a number of EDNs to deploy the EAS. In an embodiment, the selection unit 212 may be configured to select the one or more EDNs upon ascertaining that the one or more EDN is satisfying at least one requirement from the one or more requirements extracted from the EAS deployment request. In an embodiment, the selection unit 212 may be configured to prioritize the one or more requirements for selecting the one or more EDNs.

In an embodiment, the prioritization may be based on a condition. In an embodiment, the condition may include a mandatory condition of full compliance in respect of high prioritized requirements and a condition of optional compliance in respect of less prioritized requirements, based on an allowed deviation. Further, for selecting the one or more EDNs, the selection unit 212 may be configured to consider an individual requirement from the one or more requirements. In an embodiment, the selection unit 212 may be configured to group the one or more requirements in one or more groups as single criteria for selecting the one or more EDNs. In an embodiment, the one or more groups may include the latency and the cost, such that the latency and the cost is combined as one selection criteria influencing the selection to determine an amount of the latency at a certain cost In an embodiment, the one or more groups may include the geo-location and the latency grouped with one another. Further, the affinity/ anti-affinity and the cost may be grouped with one another to create the one or more groups.

Moving forward, in response to selecting the one or more EDNs from the number of EDNs, the selection unit 212 may be configured to determine whether a virtualized part is present in the EAS instance to be created. Upon determining the presence of the virtualized part, the selection unit 212 may be configured to derive the one or more requirements for a Virtual Network Function (VNF) instance.

In continuation with the above embodiment, the selection unit 212 may be configured to ascertain whether a change is required in the VNF package derived above. Upon ascertaining that the change is required in the VNF package, the selection unit 212 may be configured to invoke a VNF package management procedure corresponding to a VNF package and a VNF lifecycle management with the one or more requirements of the VNF instance.

Subsequently, the selection unit 212 may be configured to select an Edge Enabler Service (EES) contained in the one or more EDNs selected from the number of EDNs based on the one or more requirements.

As understood in the above embodiment, upon selection of the one or more EDNs and the EES based on the one or more EDNs, the creation unit 214 may be configured to create a MOI related to the EAS deployment request. In an embodiment, the MOI may be created for the EASFunction class as an object of the EASFunction class. Furthermore, the MOI may represent the EAS instance containing the one or more requirements received with the EAS deployment request. Upon creation of the MOI, the creation unit 214 may be configured to configure the MOI with configuration information related to the EAS deployment request.

Furthermore, the communication unit 208 may be configured for transmitting a response to the ECMSC 102. In an embodiment, the response may include an identifier associated with the MOI and another identifier associated with the ECSMP 104 corresponding to the EAS deployment request.

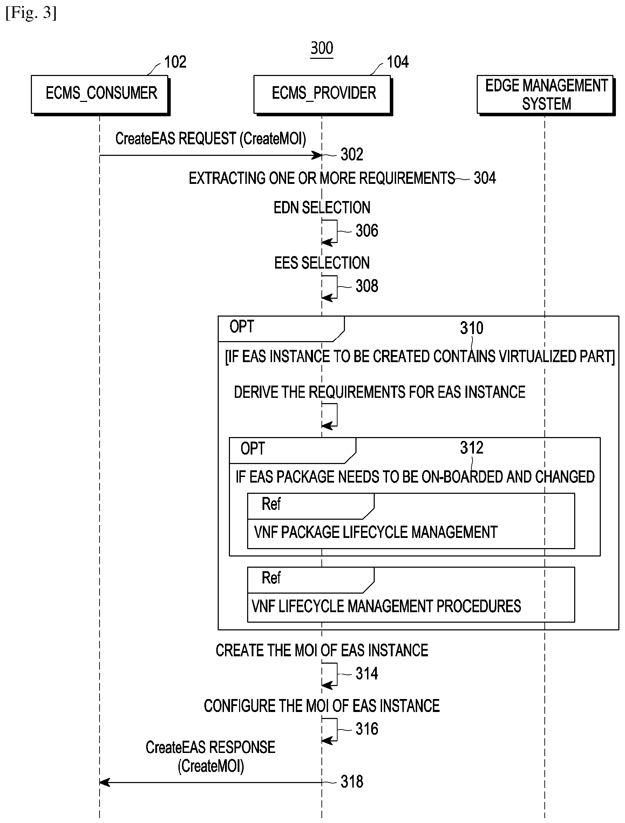

Fig. 3 illustrates an operational flow diagram 300 depicting a process for deploying an EAS, in accordance with an embodiment of the present subject matter. In an embodiment, the EAS may be deployed in in one or more EDNs amongst a number of EDNs. In an embodiment, the one or more EDNs may be selected from a number of EDNs present at an edge location in a network. In an embodiment, the deployment of the EAS may be performed the ECMSP 104 as referred in the Fig. 1 and Fig. 2. In an embodiment, ECMSP 104 may be a management entity configured to expose a management service. In an embodiment, the management service may be a provisioning management service as defined in TS 28.532. Further, the ECMSC 102 may be configured to consume the management service exposed by the ECMSP 104 for sending the EAS deployment request. In an embodiment, the deployment may be based on an EAS deployment request including on one or more requirements from the ECMSC 102 as referred in the Fig. 1 and Fig. 2. In an embodiment, the EAS deployment request may be defined in accordance with an Managed Object Instance (MOI) creation operation defined in 3GPP. Further, the EAS deployment request is to create an EAS instance associated with an EASFunction class.

In an embodiment, the process includes receiving (step 302) the EAS deployment request with the one or more requirements at the ECMSP 104 from the ECMSC 104. the EAS deployment request may be received at the communication unit 208 to create an EAS instance in order to deploy the EAS.

Continuing with the above embodiment, upon receiving the EAS deployment request, the process may proceed towards extracting (step 304) the one or more requirements from the EAS request. In an embodiment, the extraction may be performed by the extraction unit 210 as referred in the Fig. 2. In an embodiment, the one or more requirements may include a service area, an affinity and an anti-affinity, a service continuity, a cost for EAS deployment, Virtual Resource (VR) requirements, a required latency, an availability schedule of the EAS, an availability reporting period of the EAS, service requirements.

In an embodiment, the service area may be a target location for the EAS to be available at, such as a geo-location (longitude, latitude), an access network defined (e.g. Cell IDs, Tracking Areas), and a network defined (e.g. a specific EDN(s)), civic address. In an embodiment, the affinity and the anti-affinity requirements may be for the EAS with other existing EAS on a target EDN amongst the number of EDNs. The affinity and the anti-affinity may be define the affinity and anti-affinity requirements for the EAS instance. The affinity and the anti-affinity may contain two separate lists of EASIdentifiers for affinity and anti-affinity rules respectively.

In an embodiment, the service continuity support may determine whether a service continuity (i.e. user context transfer for stateful applications) is supported among a number of instances of the EAS deployed in the number of EDNs. In an embodiment, the service continuity support may define whether the EAS requires the service continuity. In an embodiment, the service continuity support may be defined as " *EAS-A ServiceContinuitySupport=TRUE:"* where it may be implied that "EAS-A should only be deployed at an EDN when EES supporting service continuity is already present"

In an embodiment, the cot for EAS deployment may determine a maximum cost for getting the EAS on the edge location. In an embodiment, the cost may be based on a number of factors such as a cost per unit of time, a number of application consumers. In an embodiment, the maximum cost may specify the maximum cost an EAP Edge Application Provider (EAP) may bear for this EAS deployment. In an embodiment, the maximum cost may be defined as *"EAS-A MaximumCost=100USD*/*X:"* where it is implied that "the cost of deploying the EAS-A should not exceed 100/X. In order to achieve that, adjustment related with latency, location and virtual resource will be done. /X: should be decided by the operator. It can be CAPX (e.g /deploy) or it can be OPEX (/month)." To achieve 100USD/deploy: The EAS may only be deployed at a "Location-A". To achieve 100USD/month: The EAS may only be deployed with X amount of maximum virtual resource and max 100mbps latency.

In an embodiment, the VR requirements may be related to requirements for a virtual resource such as a Central Processing Unit (CPU), a memory, and a storage. Further, the required latency may include a required service latency to be achieved by the EAS (e.g. a round trip latency between potential application clients and the EAS). In an embodiment, the service requirements may be internal to the EDN (e.g. from the Edge Enabler Server (EES)) or externally (e.g. from the 3GPP 5GC).

In an embodiment, the availability schedule of the EAS an availability of the EAS in terms of time windows. Further, the availability reporting period of the EAS may also be referred as "heart-beat period" In an embodiment, the availability schedule may be defined as *"EAS-A Schedule=[Start-time, Stop-time, Days-of the-week]:"* where it is implied that "EAS-A should only be deployed at an EDN during the Start-time and Stop-time window on only select days of the week". In an embodiment, the availability schedule may allow the EAS provider to maximize the usage based on data traffic predictions while minimizing the deployment costs.

In an embodiment, the availability reporting period may indicate a frequency of checking the EAS's availability upon a successful registration to the EES. In an embodiment, the availability reporting period may be defined as *"EAS-A AvaRe-portPeriod=Time :"* For applications that are time sensitive and critical, the availability reporting period may configure a heart-beat period for the EAS, based on the heart-beat period, the application, when running correctly, may report to the EES. In an embodiment, where the reporting is missed by the EAS, it may indicate to the EES that the EAS failed at the application layer (it may still be working fine at the NFV level) and corrective measures, such as reconfiguration or reboot of the EAS, should be taken at the earliest.

Moving forward, in response to extracting the one or more requirements, the process may proceed towards selecting (step 306) the one or more EDNs based on the one or more requirements. In an embodiment, the selection of the one or more EDNs may be performed by the selection unit 212 as referred in the Fig. 2 upon ascertaining that the one or more EDNs is satisfying at least one requirement from the one or more requirements extracted from the EAS deployment request. In an embodiment, the process may include prioritizing the one or more requirements for selecting the one or more EDNs. In an embodiment, the prioritization may be based on a condition. In an embodiment, the condition may include a mandatory condition of full compliance in respect of high prioritized requirements and a condition of optional compliance in respect of less prioritized requirements, based on an allowed deviation.

In an embodiment, the one or more EDNs may be selected by considering each requirement from the one or more requirements separately. In another embodiment, the one or more EDNs may be selected based on one or more groups of the one or more requirements. In an embodiment, the one or more groups may include the latency and the cost combined as one selection criteria influencing the selection as in what latency can be assured in what cost.

In an embodiment, the one or more groups may include the geo-location and the latency grouped with one another combined as one selection criteria influencing the selection as in at what location the requested latency can be provided depending on the target geographical area. Further, the affinity/anti-affinity and the cost may be grouped with one another to create the one or more groups as one selection criteria influencing the selection as in what cost will be incurred to satisfy the affinity/anti-affinity with a particular existing edge application.

**[Table 1]**

| Parameter | Priority | Type | Allowed Deviation | Description |
|---|---|---|---|---|
| Location | Must | Rigid | N.A | |
| Latency | May | Flexible | 20% | 20% deviation is allowed from the requested Latency e.g Requested Latency=100mbps, Allowed Latency=80mbps. |
| Maximum Cost | May | Flexible | 20% | 20% deviation is allowed from the requested Latency e.g Requested Latency=100 USD, Allowed Latency=80 USD. |
| Affinity/Anti-Affinity | Must | Rigid | N.A | |
| Service requirements | May | Flexible | 50% | 50% deviation is allowed from the requested Latency e.g EDN will be consider even if only half of the service requirements are supported. |
| 3GPP network capability exposure | May | Flexible | 50% | 50% deviation is allowed from the requested Latency e.g EDN will be consider even if only half of the 3GPP capabilities are available. |
| Service continuity support | May | Rigid | N.A | |
| Virtual Resource requirements | Must | Rigid | N.A | |

Table 1 depicts selection criteria for each of the one or more requirements. In an embodiment, each requirement may correspond to one priority status from "Must" and "May" such that "Must" corresponds to a higher value of consideration in comparison to "May" for selecting the one or more EDNs. Further, each requirement may correspond to one type amongst "Rigid" and "Flexible" In an embodiment, the requirement with the type "Rigid" may be fulfilled with no allowance to deviation whereas the requirement with the type "Flexible" may be allowed an amount of deviation. In an embodiment, the amount of deviation may be one of 20%, and 50%.

Subsequently, upon selection of the one or more EDNs, the process may proceed towards selecting (step 308) and EES corresponding to the one or more EDNs. In an embodiment, the selection of the EES may be performed by the selection unit 212 as referred in the Fig. 2. In an embodiment, the EES may be selected based on the one or more groups containing information related to the geo-location and the latency provided in the EAS deployment request.

Continuing with the above embodiment, the process may proceed towards determining (step 310) whether a virtualized part is present in the EAS instance to be created. In an embodiment, where it is determined that the virtualized part is present in the EAS instance to be created, the proceed may proceed towards deriving the one or more requirements for a Virtual Network Function (VNF) instance. In an embodiment, the one or more requirements may be derived by the selection unit 212 as referred in the Fig. 2.

In continuation with the above embodiment, the process may proceed towards ascertaining (step 312) whether a change is required in the VNF package derived above. In an embodiment, where it is determined that the change is required in the VNF package, the process may include invoking a VNF package management procedure corresponding to a VNF package and a VNF lifecycle management with the one or more requirements of the VNF instance. In an embodiment, the NF package may be invoked by the selection unit 212 as referred in the Fig. 2.

Subsequently, the process may proceed towards, creating (step 314) a MOI related to the EAS deployment request. In an embodiment, the MOI may be created for the EASFunction class as an object of the EASFunction class. Furthermore, the MOI may include the EAS instance containing the one or more requirements received with the EAS deployment request. In an embodiment, the MOI may be created by the creation unit 214 as referred in the Fig. 2.

Upon creation of the MOI, the process may proceed towards configuring (step 316) the MOI with configuration information related to the EAS deployment request as per an information model definition for an edge specific Network Resource Model (NRM). In an embodiment, the configuration information may be provided in EAS deployment request and contained within the within the EAS instance in the MOI. In an embodiment, the MOI may be configuring by the creation unit 214 as referred in the Fig. 2.

Continuing with the above embodiment, the process may proceed towards, transmitting (step 318) a response to the ECMSC 102 from the ECMSP 104. In an embodiment, the response may be transmitted by the communication unit 208. In an embodiment, the response may include an identifier associated with the MOI and another identifier associated with the ECSMP 104 corresponding to the EAS deployment request.

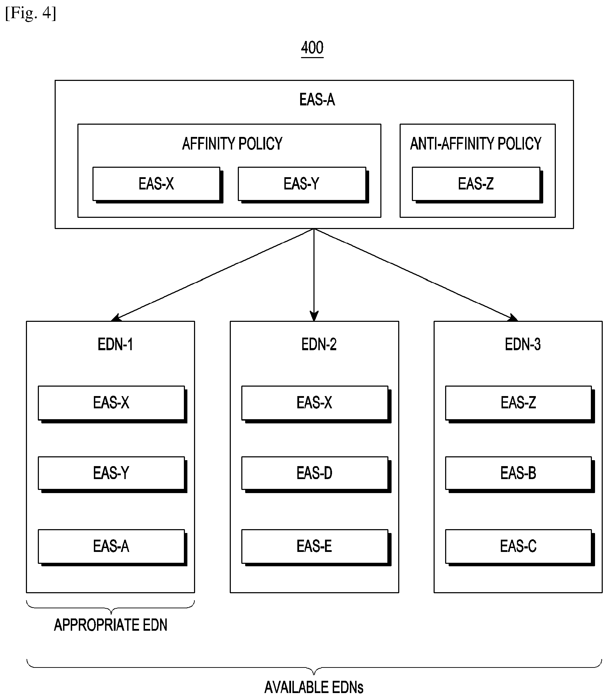

Fig. 4 illustrates an operational flow diagram 400 depicting an affinity and anti-affinity handling, in accordance with an embodiment of the present subject matter. In an embodiment, an Application Service Provider (ASP) may be configured to provide affinity and anti-affinity policies for the EAS. In an embodiment, the A&A policies may be required to select an appropriate EDN amongst a number of EDNs. In an embodiment, the A&A policies may be captured in an EAS Profile and a Virtual Network Function Descriptor (VNFD) describing the EAS. Further, the VNFD may be utilised by the ECMSP 104 to perform a lifecycle management of an EAS VNF. In an embodiment, the EAS Profile may be utilised by the EES to provision the EEC with EAS information. The syntax for the A&A is stated below:

*EAS-A Affinity=App-Id1:* This would imply that EAS-A should only be deployed at an EDN where EAS with application-ID App-Id1 is already deployed.

*EAS-A Anti-Affinity= App-Id2:* This would imply that EAS-A should not be deployed at an EDN where EAS with application-ID App-Id2 is already deployed.

Wherein, an *App-Id* is considered to be unique globally.

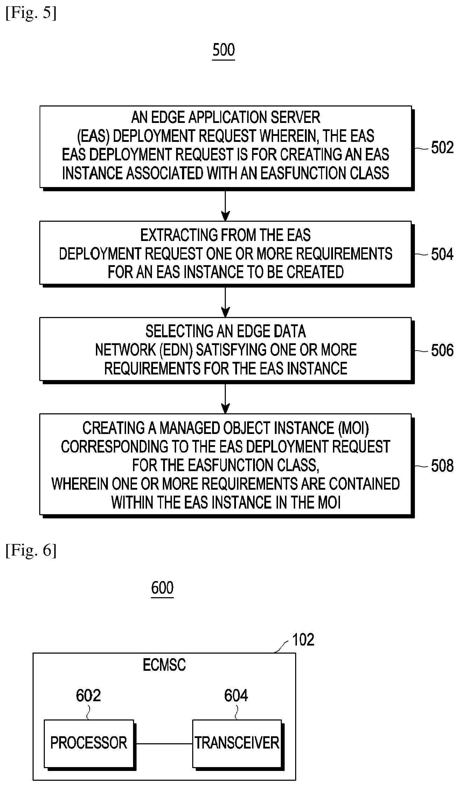

Fig. 5 illustrates a method 500 for deploying an EAS, according to an embodiment of the present subject matter. In an example, the method 200 may be implemented by the ECMSP 104 using components thereof, as described above. In an embodiment, the method may be executed by the communication unit 208, the extraction unit 210, the selection unit 212, the creation unit 214. Further, for the sake of brevity, details of the present disclosure that are explained in details in the description of FIG. 1 to FIG. 4 are not explained in detail in the description of FIG.5.

At block 502, the method 500 includes receiving, by an Edge Computing Management Service Provider (ECMSP) (104), an Edge Application Server (EAS) deployment request wherein, the EAS deployment request is for creating an EAS instance associated with an EASFunction class.

At block 504, the method 500 includes, extracting by the ECMSP (104), from the EAS deployment request one or more requirements for an EAS instance to be created.

At block 506, the method 500 includes, selecting by the ECMSP (104), an edge data network (EDN) satisfying one or more requirements for the EAS instance.

At block 508, the method 500 includes, creating a Managed Object Instance (MOI) corresponding to the EAS deployment request by the ECMSP (104) for the EASFunction class, wherein one or more requirements are contained within the EAS instance in the MOI.

FIG. 6 illustrates a schematic block diagram of a Edge Computing Management Service Consumer (ECMSC) for deploying an EAS, in accordance with an embodiment of the present subject matter. In an embodiment, the ECMSC 102 may be a hardware, a software, or a combination of hardware and software.

The ECMSC 102 described above with reference to FIGS. 1 through 5 may correspond to the ECMSC 600 of FIG. 6.

In an embodiment, the ECMSC 102 may include a processor 602 and a transceiver (a communication unit, communicator or communication interface). In an embodiment the ECMSC 102 may further include a memory, data, an extraction unit, a selection unit, and a creation unit. In an embodiment, the processor 602 and the transceiver may be communicably coupled to one another. Hereinafter, it is understood that terms including "unit" or "er" at the end may refer to the unit for processing at least one function or operation and may be implemented in hardware, software, or a combination of hardware and software.

Referring to FIG. 6, According to the above-described communication method of the ECMSC 600, the transceiver 604, and the processor 602 of the ECMSC 600 may operate. However, components of the ECMSC 600 are not limited to the above-described example. For example, the ECMSC 600 may include components that are more than or less than the above-described components. Moreover, the transceiver 604 and the processor 602 may be implemented in a single chip form. The processor 602 may include one or more processors.

The transceiver 604 may collectively refer to a receiver and a transmitter of the ECMSC 600, and may transmit and receive a signal to and from a ECMSP 200, UE, or other communication device.

The processor 602 may control a series of processes such that the ECMSC 102 operates according to the above-described embodiment of the disclosure. For example, the processor 602 may receive a control signal and a data signal through the transceiver 604 and process the received control signal and data signal. The processor 602 may transmit the processed control signal and data signal through the transceiver 604. The processor 602 may be provided in plural and may perform an operation of controlling components of the ECMSC 600 by executing a program stored in a memory. The processor 602 may control the transceiver 604 to operate according to an embodiment of the disclosure.

While specific language has been used to describe the present disclosure, any limitations arising on account thereto, are not intended. As would be apparent to a person in the art, various working modifications may be made to the method to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method performed by a provider (104) of an edge computing management service in a wireless communication system, the method comprising:
receiving, from a consumer (102) of the edge computing management service, a request for an edge application server, EAS, deployment to create an EAS instance associated with an EASFunction class;
identifying, based on the request for the EAS deployment, one or more requirements for the EAS instance;
selecting an edge data network, EDN, based on the one or more requirements for the EAS instance; and
creating a managed object instance, MOI, corresponding to the request for the EAS deployment.

2. The method of claim 1, further comprising:
transmitting a response comprising a parameter which notifies the MOI has been created as a response to the request for the EAS deployment to the consumer (102).

3. The method of claim 1, wherein the one or more requirements include at least one of:
a service area;
an affinity and an anti-affinity;
a service continuity;
virtual resource, VR, requirements;
a cost for EAS deployment;
a required latency;
an availability schedule of the EAS; or
an availability reporting period of the EAS.

4. The method of claim 1, further comprising
selecting an edge enabler server, EES, in the selected EDN based on the one or more requirements.

5. The method of claim 4, wherein the EDN is selected based on an individual requirement or grouping of the one or more requirements as single selection criteria, wherein the single selection criteria includes at least one of:
a latency and a cost, wherein the latency and the cost are combined as one selection criteria influencing selection to determine an amount of the latency at a certain cost,
a geo-location and latency, wherein the geo-location and the latency are combined as one selection criteria influencing selection as in at what location a requested latency is provided depending on a target geographical area, or
an affinity/anti-affinity and cost, wherein the affinity/anti-affinity and the cost are combined as one selection criteria influencing selection as in what cost is incurred to satisfy the affinity/anti-affinity with a particular existing edge application.

6. The method of claim 1, wherein the selecting of the EDN by the ECMSP (104) comprises one or more of:
deriving the one or more requirements for a Virtual Network Function, VNF, instance upon determining presence of a virtualized part in the EAS instance to be created; and
invoking a VNF package management procedure corresponding to a VNF package upon ascertaining that a change is required in the VNF package and VNF lifecycle management with the one or more requirements of the VNF instance.

7. The method of claim 1, further comprising configuring the MOI created corresponding to the request with configuration information, wherein the configuration information is provided in request for the EAS deployment and contained within the within the EAS instance in the MOI.

8. The method of claim 1, wherein the one or more requirements are prioritized for selecting the one or more EDNs,
wherein the one or more requirements are contained within the EAS instance in the MOI, and
wherein the prioritized one or more requirements for the EDN selection are defined as:
a mandatory condition of full compliance in respect of high prioritized requirements; and a condition of optional compliance in respect of less prioritized requirements, based on an allowed deviation.

9. A provider (104) of an edge computing management service in a wireless communication system, the provider (104) comprising:
transceiver; and
at least one processor,
wherein the at least one processor configured to:
receive, from a consumer (102) of the edge computing management service, a request for an edge application server, EAS, deployment to create an EAS instance associated with an EASFunction class,
identify, based on the request for the EAS deployment, one or more requirements for the EAS instance,
select an edge data network, EDN, based on the one or more requirements for the EAS instance, and
create a managed object instance, MOI, corresponding to the request for the EAS deployment.

10. The provider of claim 9, wherein the processor is further configured to transmit a response comprising a parameter which notifies the MOI has been created as a response to the request for the EAS deployment to the consumer (102).

11. The provider of claim 9, wherein the one or more requirements include at least one of: a service area;
an affinity and an anti-affinity;
a service continuity;
virtual resource, VR, requirements;
a cost for EAS deployment;
a required latency;
an availability schedule of the EAS; or
an availability reporting period of the EAS.

12. The provider of claim 9, wherein the processor is further configured to select an edge enabler server, EES, in the selected EDN based on the one or more requirements.

13. The provider of claim 12, wherein the EDN is selected based on an individual requirement or grouping of the one or more requirements as single selection criteria, wherein the single selection criteria includes at least one of:
a latency and a cost, wherein the latency and the cost are combined as one selection criteria influencing selection to determine an amount of the latency at a certain cost,
a geo-location and latency, wherein the geo-location and the latency are combined as one selection criteria influencing selection as in at what location a requested latency is provided depending on a target geographical area, or
an affinity/anti-affinity and cost, wherein the affinity/anti-affinity and the cost are combined as one selection criteria influencing selection as in what cost is incurred to satisfy the affinity/anti-affinity with a particular existing edge application.

14. The provider of claim 9, wherein the at least one processor is configured to one or more of:
derive the one or more requirements for a Virtual Network Function, VNF, instance upon determining presence of a virtualized part in the EAS instance to be created; and
invoke a VNF package management procedure corresponding to a VNF package upon ascertaining that a change is required in the VNF package and VNF lifecycle management with the one or more requirements of the VNF instance.

15. The provider of claim 9, wherein the at least one processor is further configured to configure the MOI created corresponding to the request with configuration information, wherein the configuration information is provided in request for the EAS deployment and contained within the within the EAS instance in the MOI,
wherein the one or more requirements are prioritized for selecting the one or more EDNs,
wherein the one or more requirements are contained within the EAS instance in the MOI, and
wherein the prioritized one or more requirements for the EDN selection are defined as: a mandatory condition of full compliance in respect of high prioritized requirements; and a condition of optional compliance in respect of less prioritized requirements, based on an allowed deviation.

## Patentansprüche

1. Verfahren, das von einem Anbieter (104) eines Edge-Computing-Verwaltungsdienstes in einem drahtlosen Kommunikationssystem durchgeführt wird, wobei das Verfahren Folgendes umfasst:
Empfangen einer Anforderung für einen Edge-Anwendungsserver(EAS)-Einsatz von einem Verbraucher (102) des Edge-Computing-Verwaltungsdienstes, um eine EAS-Instanz zu erstellen, die mit einer EAS-Funktionsklasse verbunden ist;
Identifizieren einer oder mehrerer Anforderungen für die EAS-Instanz basierend auf der Anforderung für den EAS-Einsatz;
Auswählen eines Edge-Datennetzwerks, EDN, basierend auf der einen oder den mehreren Anforderungen für die EAS-Instanz; und
Erstellen einer verwalteten Objektinstanz, MOI, die der Anforderung für den EAS-Einsatz entspricht.

2. Verfahren nach Anspruch 1, das ferner Folgendes umfasst:
Übertragen einer Antwort, die einen Parameter umfasst, der mitteilt, dass die MOI als Antwort auf die Anforderung für den EAS-Einsatz an den Verbraucher (102) erstellt wurde.

3. Verfahren nach Anspruch 1, wobei die eine oder mehreren Anforderungen mindestens eine der Folgenden einschließen:
einen Dienstbereich;
eine Affinität und eine Anti-Affinität;
eine Dienstkontinuität;
Anforderungen an virtuelle Ressourcen, VR,
Kosten für den EAS-Einsatz;
eine erforderliche Latenz;
einen Verfügbarkeitsplan des EAS; und/ oder
einen Verfügbarkeitsberichtszeitraum des EAS.

4. Verfahren nach Anspruch 1, das ferner Folgendes umfasst:
Auswählen eines Edge-Enabler-Servers, EES, in dem ausgewählten EDN basierend auf der einen oder den mehreren Anforderungen.

5. Verfahren nach Anspruch 4, wobei das EDN basierend auf einer einzelnen Anforderung oder einer Gruppierung der einen oder mehreren Anforderungen als einzelnes Auswahlkriterium ausgewählt wird, wobei das einzelne Auswahlkriterium mindestens eines der Folgenden einschließt:
eine Latenz und Kosten, wobei die Latenz und die Kosten als ein Auswahlkriterium kombiniert werden, das die Auswahl beeinflusst, um einen Betrag der Latenz bei bestimmten Kosten zu bestimmen,
eine Geolokalisierung und Latenz, wobei die Geolokalisierung und die Latenz als ein Auswahlkriterium kombiniert werden, das die Auswahl beeinflusst, an welchem Standort eine angeforderte Latenz in Abhängigkeit von einem geografischen Zielgebiet bereitgestellt wird, und/oder
eine Affinität/Anti-Affinität und Kosten, wobei die Affinität/Anti-Affinität und die Kosten als ein Auswahlkriterium kombiniert werden, das die Auswahl beeinflusst, welche Kosten entstehen, um die Affinität/Anti-Affinität mit einer bestimmten bestehenden Edge-Anwendung zu erfüllen.

6. Verfahren nach Anspruch 1, wobei die Auswahl des EDN durch den ECMSP (104) einen oder mehrere der folgenden Schritte umfasst:
Ableiten der einen oder mehreren Anforderungen für eine virtuelle Netzwerkfunktion(VNF)-Instanz nach Feststellen des Vorhandenseins eines virtualisierten Teils in der zu erstellenden EAS-Instanz; und
Aufrufen eines VNF-Paketverwaltungsverfahrens, das einem VNF-Paket entspricht, nach Feststellen, dass eine Änderung am VNF-Paket und an der VNF-Lebenszyklusverwaltung mit der einen oder den mehreren Anforderungen der VNF-Instanz erforderlich ist.

7. Verfahren nach Anspruch 1, das ferner das Konfigurieren der entsprechend der Anforderung erstellten MOI mit Konfigurationsinformationen umfasst, wobei die Konfigurationsinformationen in der Anforderung für den EAS-Einsatz bereitgestellt werden und in der EAS-Instanz in der MOI enthalten sind.

8. Verfahren nach Anspruch 1, wobei die eine oder mehreren Anforderungen für die Auswahl des einen oder der mehreren EDNs priorisiert werden,
wobei die eine oder die mehreren Anforderungen in der EAS-Instanz in der MOI enthalten sind, und
wobei die priorisierten eine oder mehreren Anforderungen für die EDN-Auswahl wie folgt definiert werden:
eine zwingende Bedingung der vollständigen Erfüllung in Bezug auf Anforderungen mit hoher Priorität; und eine Bedingung der optionalen Erfüllung in Bezug auf Anforderungen mit geringerer Priorität, basierend auf einer zulässigen Abweichung.

9. Anbieter (104) eines Edge-Computing-Verwaltungsdienstes in einem drahtlosen Kommunikationssystem, wobei der Anbieter (104) Folgendes umfasst:
einen Transceiver; und
mindestens einen Prozessor,
wobei der mindestens eine Prozessor konfiguriert ist zum:
Empfangen einer Anforderung für einen Edge-Anwendungsserver(EAS)-Einsatz von einem Verbraucher (102) des Edge-Computing-Verwaltungsdienstes, um eine EAS-Instanz zu erstellen, die mit einer EAS-Funktionsklasse verbunden ist,
Identifizieren einer oder mehrerer Anforderungen für die EAS-Instanz basierend auf der Anforderung für den EAS-Einsatz,
Auswählen eines Edge-Datennetzwerks, EDN, basierend auf der einen oder den mehreren Anforderungen für die EAS-Instanz, und
Erstellen einer verwalteten Objektinstanz, MOI, die der Anforderung für den EAS-Einsatz entspricht.

10. Anbieter nach Anspruch 9, wobei der Prozessor ferner so konfiguriert ist, dass er eine Antwort überträgt, die einen Parameter umfasst, der mitteilt, dass die MOI als Antwort auf die Anforderung für den EAS-Einsatz an den Verbraucher (102) erstellt wurde.

11. Anbieter nach Anspruch 9, wobei die eine oder mehreren Anforderungen mindestens eine der Folgenden einschließen:
einen Dienstbereich;
eine Affinität und eine Anti-Affinität;
eine Dienstkontinuität;
Anforderungen an virtuelle Ressourcen, VR,
Kosten für den EAS-Einsatz;
eine erforderliche Latenz;
einen Verfügbarkeitsplan des EAS; und/oder
einen Verfügbarkeitsberichtszeitraum des EAS.

12. Anbieter nach Anspruch 9, wobei der Prozessor ferner so konfiguriert ist, dass er einen Edge-Enabler-Server, EES, in dem ausgewählten EDN basierend auf der einen oder den mehreren Anforderungen auswählt.

13. Anbieter nach Anspruch 12, wobei das EDN basierend auf einer einzelnen Anforderung oder einer Gruppierung der einen oder mehreren Anforderungen als einzelnes Auswahlkriterium ausgewählt wird, wobei das einzelne Auswahlkriterium mindestens eines der Folgenden einschließt:
eine Latenz und Kosten, wobei die Latenz und die Kosten als ein Auswahlkriterium kombiniert werden, das die Auswahl beeinflusst, um einen Betrag der Latenz bei bestimmten Kosten zu bestimmen,
eine Geolokalisierung und Latenz, wobei die Geolokalisierung und die Latenz als ein Auswahlkriterium kombiniert werden, das die Auswahl beeinflusst, an welchem Standort eine angeforderte Latenz in Abhängigkeit von einem geografischen Zielgebiet bereitgestellt wird, und/oder
eine Affinität/Anti-Affinität und Kosten, wobei die Affinität/Anti-Affinität und die Kosten als ein Auswahlkriterium kombiniert werden, das die Auswahl beeinflusst, welche Kosten entstehen, um die Affinität/Anti-Affinität mit einer bestimmten bestehenden Edge-Anwendung zu erfüllen.

14. Anbieter nach Anspruch 9, wobei der mindestens eine Prozessor für eine oder mehrere der Folgenden konfiguriert ist:
Ableiten der einen oder mehreren Anforderungen für eine virtuelle Netzwerkfunktion(VNF)-Instanz nach Feststellen des Vorhandenseins eines virtualisierten Teils in der zu erstellenden EAS-Instanz; und
Aufrufen eines VNF-Paketverwaltungsverfahrens, das einem VNF-Paket entspricht, nach Feststellen, dass eine Änderung am VNF-Paket und an der VNF-Lebenszyklusverwaltung mit der einen oder den mehreren Anforderungen der VNF-Instanz erforderlich ist.

15. Anbieter nach Anspruch 9, wobei der mindestens eine Prozessor ferner so konfiguriert ist, dass er die entsprechend der Anforderung erstellte MOI mit Konfigurationsinformationen konfiguriert, wobei die Konfigurationsinformationen in der Anforderung für den EAS-Einsatz bereitgestellt werden und in der EAS-Instanz in der MOI enthalten sind,
wobei die eine oder mehreren Anforderungen für die Auswahl des einen oder der mehreren EDNs priorisiert werden,
wobei die eine oder mehreren Anforderungen in der EAS-Instanz in der MOI enthalten sind, und
wobei die priorisierten eine oder mehreren Anforderungen für die EDN-Auswahl wie folgt definiert werden: eine zwingende Bedingung der vollständigen Erfüllung in Bezug auf Anforderungen mit hoher Priorität; und eine Bedingung der optionalen Erfüllung in Bezug auf Anforderungen mit geringerer Priorität, basierend auf einer zulässigen Abweichung.

## Revendications

1. Méthode exécutée par un fournisseur (104) d'un service de gestion informatique de périphérie dans un système de communication sans fil, la méthode comprenant :
recevoir, d'un consommateur (102) du service de gestion informatique de périphérie, une demande pour un déploiement de serveur d'application de périphérie, EAS, afin de créer une instance EAS associée à une classe EASFunction ;
identifier, sur la base de la demande de déploiement EAS, une ou plusieurs exigences pour l'instance EAS ;
sélectionner un réseau de données de périphérie, EDN, sur la base de l'une ou plusieurs exigences pour l'instance EAS ; et
créer une instance d'objet géré, MOI, correspondant à la demande de déploiement EAS.

2. Méthode selon la revendication 1, comprenant en outre :
transmettre une réponse comprenant un paramètre qui notifie que la MOI a été créée en réponse à la demande de déploiement EAS au consommateur (102).

3. Méthode selon la revendication 1, où l'une ou plusieurs exigences comprennent au moins l'un parmi :
une zone de service ;
une affinité et une anti-affinité ;
une continuité de service ;
des exigences de ressources virtuelles, VR ;
un coût pour le déploiement EAS ;
une latence requise ;
un programme de disponibilité de l'EAS ; ou
une période de rapport de disponibilité de l'EAS.

4. Méthode selon la revendication 1, comprenant en outre
sélectionner un serveur d'activation de périphérie, EES, dans l'EDN sélectionné sur la base de l'une ou plusieurs exigences.

5. Méthode selon la revendication 4, où l'EDN est sélectionné sur la base d'une exigence individuelle ou d'un groupement de l'une ou plusieurs exigences comme critère de sélection unique, où le critère de sélection unique inclut au moins l'un parmi :
une latence et un coût, où la latence et le coût sont combinés en un critère de sélection influençant la sélection afin de déterminer une quantité de latence à un certain coût,
une géolocalisation et une latence, où la géolocalisation et la latence sont combinées en un critère de sélection influençant la sélection quant à l'emplacement où une latence demandée est fournie en fonction d'une zone géographique cible, ou
une affinité/anti-affinité et un coût, où l'affinité/anti-affinité et le coût sont combinés en un critère de sélection influençant la sélection quant au coût engagé pour satisfaire l'affinité/anti-affinité avec une application de périphérie existante particulière.

6. Méthode selon la revendication 1, où la sélection de l'EDN par l'ECMSP (104) comprend un ou plusieurs parmi :
dériver l'une ou plusieurs exigences pour une instance de fonction de réseau virtuel, VNF, lors de la détermination de la présence d'une partie virtualisée dans l'instance EAS à créer ; et
invoquer une procédure de gestion de paquet VNF correspondant à un paquet VNF après avoir vérifié qu'une modification est nécessaire dans le paquet VNF et la gestion du cycle de vie VNF avec l'une ou plusieurs exigences de l'instance VNF.

7. Méthode selon la revendication 1, comprenant en outre la configuration de la MOI créée correspondant à la demande avec des informations de configuration, où les informations de configuration sont fournies dans la demande de déploiement EAS et contenues dans l'instance EAS dans la MOI.

8. Méthode selon la revendication 1, où l'une ou plusieurs exigences sont classées par ordre de priorité pour la sélection de l'un ou plusieurs EDN,
où l'une ou plusieurs exigences sont contenues dans l'instance EAS dans la MOI, et
où l'une ou plusieurs exigences prioritaires pour la sélection EDN sont définies comme :
une condition obligatoire de conformité totale en ce qui concerne les exigences hautement prioritaires ; et une condition de conformité facultative en ce qui concerne les exigences moins prioritaires, sur la base d'un écart autorisé.

9. Fournisseur (104) d'un service de gestion informatique de périphérie dans un système de communication sans fil, le fournisseur (104) comprenant :
un émetteur-récepteur ; et
au moins un processeur,
où l'au moins un processeur est configuré pour :
recevoir, d'un consommateur (102) du service de gestion informatique de périphérie, une demande pour un déploiement de serveur d'application de périphérie, EAS, afin de créer une instance EAS associée à une classe EASFunction,
identifier, sur la base de la demande de déploiement EAS, une ou plusieurs exigences pour l'instance EAS,
sélectionner un réseau de données de périphérie, EDN, sur la base de l'une ou plusieurs exigences pour l'instance EAS, et
créer une instance d'objet géré, MOI, correspondant à la demande de déploiement EAS.

10. Fournisseur selon la revendication 9, où le processeur est en outre configuré pour transmettre une réponse comprenant un paramètre qui notifie que la MOI a été créée en réponse à la demande de déploiement EAS au consommateur (102).

11. Fournisseur selon la revendication 9, où l'une ou plusieurs exigences incluent au moins l'un parmi :
une zone de service ;
une affinité et une anti-affinité ;
une continuité de service ;
des exigences de ressources virtuelles, VR ;
un coût pour le déploiement EAS ;
une latence requise ;
un programme de disponibilité de l'EAS ; ou
une période de rapport de disponibilité de l'EAS.

12. Fournisseur selon la revendication 9, où le processeur est en outre configuré pour sélectionner un serveur d'activation de périphérie, EES, dans l'EDN sélectionné sur la base de l'une ou plusieurs exigences.

13. Fournisseur selon la revendication 12, où l'EDN est sélectionné sur la base d'une exigence individuelle ou d'un groupement de l'une ou plusieurs exigences comme critère de sélection unique, où le critère de sélection unique inclut au moins l'un parmi :
une latence et un coût, où la latence et le coût sont combinés en un critère de sélection influençant la sélection afin de déterminer une quantité de latence à un certain coût,
une géolocalisation et une latence, où la géolocalisation et la latence sont combinées en un critère de sélection influençant la sélection quant à l'emplacement où une latence demandée est fournie en fonction d'une zone géographique cible, ou
une affinité/anti-affinité et un coût, où l'affinité/anti-affinité et le coût sont combinés en un critère de sélection influençant la sélection quant au coût engagé pour satisfaire l'affinité/anti-affinité avec une application de périphérie existante particulière.

14. Fournisseur selon la revendication 9, où l'au moins un processeur est configuré pour l'un ou plusieurs parmi :
dériver l'une ou plusieurs exigences pour une instance de fonction de réseau virtuel, VNF, lors de la détermination de la présence d'une partie virtualisée dans l'instance EAS à créer ; et
invoquer une procédure de gestion de paquet VNF correspondant à un paquet VNF après avoir vérifié qu'une modification est nécessaire dans le paquet VNF et la gestion du cycle de vie VNF avec l'une ou plusieurs exigences de l'instance VNF.

15. Fournisseur selon la revendication 9, où l'au moins un processeur est en outre configuré pour configurer la MOI créée correspondant à la demande avec des informations de configuration, où les informations de configuration sont fournies dans la demande de déploiement EAS et contenues dans l'instance EAS dans la MOI,
où l'une ou plusieurs exigences sont classées par ordre de priorité pour la sélection de l'un ou plusieurs EDN,
où l'une ou plusieurs exigences sont contenues dans l'instance EAS dans la MOI, et
où l'une ou plusieurs exigences prioritaires pour la sélection EDN sont définies comme : une condition obligatoire de conformité totale en ce qui concerne les exigences hautement prioritaires ; et une condition de conformité facultative en ce qui concerne les exigences moins prioritaires, sur la base d'un écart autorisé.
